# EUROPEAN PATENT SPECIFICATION

(11) **EP 4 253 099 B1**
(45) Date of publication and mention of the grant of the patent: **03.12.2025**
(21) Application number: 22305399.2
(22) Date of filing: 30.03.2022
(51) Int. Cl.: B60C 23/04, H04L 9/06, H04L 9/08

(54) **A METHOD OF EXCHANGING CRYPTOGRAPHIC PARAMETERS IN A NETWORK OF TIRE MONITORING DEVICES**
VERFAHREN ZUM AUSTAUSCH KRYPTOGRAPHISCHER PARAMETER IN EINEM NETZWERK VON REIFENÜBERWACHUNGSVORRICHTUNGEN
PROCÉDÉ D'ÉCHANGE DE PARAMÈTRES CRYPTOGRAPHIQUES DANS UN RÉSEAU DE DISPOSITIFS DE SURVEILLANCE DE PNEUS

(43) Date of publication of application: 04.10.2023
(73) Proprietor: Airbus Operations Limited, Bristol BS34 7PA (GB); Airbus Operations GmbH, 21129 Hamburg (DE); AIRBUS OPERATIONS (S.A.S.), 31060 Toulouse (FR); Airbus Defence and Space GmbH, 82024 Taufkirchen (DE)
(72) Inventor: BILL, Andrew, Bristol, BS34 7PA (GB); MARWEDEL, Stephan, 21129 Hamburg (DE); DUCHOSSOY, Christelle, 31060 TOULOUSE (FR); BLASS, Erik-Oliver, 82024 Taufkirchen (DE)
(74) Representative: Willows, Ben Ellis

(56) References cited:
- GB-A- 2 584 850
- US-A1- 2020 313 885
- US-A1- 2021 178 838

## Description

### TECHNICAL FIELD

The present invention relates to a method of exchanging cryptographic parameters in a network of tire monitoring devices, such as a network of aircraft tire monitoring devices.

### BACKGROUND

Checking tire pressure is an important part of the maintenance of a vehicle. Tire pressures should be maintained at predetermined pressures to ensure that a tire performs as intended by the manufacturer. Incorrect tire pressure can lead to a tire failing, perhaps bursting and causing damage to the vehicle and/or a loss of control.

GB2584850 describes a method of copying data from a first device to a second device, each device comprising a wireless communication interface having a maximum range. The method comprises transmitting, by the first device, the data to a third device positioned within the maximum range of the first device, receiving and storing the data at the third device, moving the third device to a location within the maximum range of the second device, and transmitting by the third device, the data to the second device.

US2020/313885 describes secure vehicular part communication. A vehicular communication component is configured to receive a part public key and a part signature from a part communication component associated with a vehicular part, to generate a vehicular public key and to use the key to encrypt vehicular part data. The vehicular communication component is configured to provide the public key and data to the part communication component and to then receive part data encrypted using the vehicular public key.

US2021/178838 describes approaches for directed communications between tire pressure sensors. One sensor may act as a teacher while other sensors may act as students and learn from the teacher sensor.

### SUMMARY

A first aspect of the present invention provides a method of exchanging cryptographic parameters in a network of tire monitoring devices, the method comprising broadcasting, from each tire monitoring device to a plurality of other tire monitoring devices, a message comprising a cryptographic parameter generated by that respective tire monitoring device.

The network of tire monitoring devices may comprise a wireless network of tire monitoring devices.

The method may comprise broadcasting, from each tire monitoring device to each other tire monitoring device, the message comprising the cryptographic parameter generated by that respective tire monitoring device.

The method may comprise utilising an intermediate device as a router for the message. The intermediate device may receive and transmit the message via Bluetooth^{®}. Example intermediate devices include: a router, hub or access point provided at a location on or in the aircraft, and a device external to the aircraft, including a mobile device or a generally stationary device such as an access point.

In general, a cryptographic parameter, may be anything used for cryptography, including but not limited to cryptographic commitments and keys (symmetrical and asymmetric). In an example, the cryptographic parameter comprises a cryptographic commitment generated by the respective tire monitoring device.

The method may comprise broadcasting, from each tire monitoring device to a plurality of other tire monitoring devices, for example each other tire monitoring device, an input to open the cryptographic commitment generated by the respective tire monitoring device, and verifying, at each tire monitoring device, the commitments received by the respective tire monitoring device using the respective inputs.

The method may comprise broadcasting, from each tire monitoring device to a plurality of other tire monitoring devices, for example each other tire monitoring device, a public key generated by the respective tire monitoring device, and generating, at each tire monitoring device, the cryptographic parameter using the public keys generated and received by the respective tire monitoring device.

The method may comprise generating, at each tire monitoring device, a random number, and generating the cryptographic parameter using the random number generated by the respective tire monitoring device.

The method may comprise broadcasting, from each tire monitoring device to each other tire monitoring device, configuration data of that tire monitoring device, and generating the cryptographic parameter comprises using the configuration data.

The method may comprise: generating, at each tire monitoring device, a shared key pair for the tire monitoring device and each other tire monitoring device; each shared key pair comprising a first shared key and a second shared key; generating, at each tire monitoring device, using a function based on the respective first shared keys, a value to communicate to each other tire monitoring device; transmitting, from each tire monitoring device to each other tire monitoring device, a respective generated value; verifying, at each tire monitoring device, received generated values; and where received generated values are correctly verified, establishing secure future communication between respective tire monitoring devices using the respective second shared keys. The transmitting is preferably unicast to each device, but could also be broadcast, for example by combining the respective generated values into a message which is received by multiple devices and each device can extract its respective value.

Generating the value to communicate to each other tire monitoring device using a function based on the respective first shared keys may comprise using any of a random number, a public key generated by that tire monitoring device, and a public key generated by the other tire monitoring device for which the value is generated, as inputs for the function.

The method may comprise generating, at each tire monitoring device, a seed for a pseudo-random generator for each other tire monitoring device, and generating, at each tire monitoring device, the shared key pair for the tire monitoring device and each other tire monitoring device using the pseudo-random generator.

Generating the seed for a pseudo-random generator may comprise utilising a hash function, with the private key of that tire monitoring device and the public key of the other tire monitoring device for which the seed is being generated, as inputs for the hash function.

Verifying received generated values may comprise using the pseudo-random function based on the respective first shared keys.

The plurality of tire monitoring devices may comprise at least three tire monitoring devices. In other examples, the plurality of tire monitoring devices may comprise at least four, at least five, at least six, at least eight, at least ten, at least twelve or at least twenty tire monitoring devices.

The method may comprise providing, at each tire monitoring device, a signal indicative of a state of the tire monitoring device and verifying, by an operator, whether each signal matches each other signal.

The signal indicative of a state of the tire monitoring device may comprise a signal based on configuration data of the tire monitoring device, public keys generated and received by the tire monitoring device, and random numbers generated and received by the tire monitoring device. For example, the signal may be based a hash function.

The plurality of tire monitoring devices may comprise a plurality of tire pressure monitoring devices.

According to a second aspect of the present invention there is provided a tire monitoring device comprising a communication module for communication with a plurality of further tire monitoring devices, and a processor configured to generate a cryptographic parameter, the communication module configured to broadcast a message comprising the cryptographic parameter to at least two of the plurality of further tire monitoring devices. The cryptographic parameter comprises a cryptographic commitment generated by the tire monitoring device.

The communication module may be configured to receive, via a broadcast message, cryptographic parameters generated by other ones of the plurality of further tire monitoring devices.

According to a third aspect of the present invention there is provided an aircraft system comprising a plurality of tire monitoring devices according to the second aspect of the present invention.

According to a fourth aspect of the present invention there is provided an aircraft comprising the aircraft system according to the third aspect of the present invention.

Also disclosed herein is a method of establishing secure communication between a plurality of tire monitoring devices, the method comprising: generating, at each tire monitoring device, a public key; broadcasting, by each tire monitoring device to all other tire monitoring devices, the respective public keys; generating, at each tire monitoring device, a cryptographic commitment using all the public keys; broadcasting, by each tire monitoring device to all other tire monitoring devices, the respective cryptographic commitments; broadcasting, by each tire monitoring device to all other tire monitoring devices, an input to open the cryptographic commitment generated by that tire monitoring device; verifying, at each tire monitoring device, the commitments received by the respective tire monitoring device using the respective inputs; generating, at each tire monitoring device, a shared key pair for the tire monitoring device and all other tire monitoring devices, each shared key pair comprising a first shared key and a second shared key; generating, at each tire monitoring device, using a function based on the respective first shared keys, a value to communicate to each other tire monitoring device; unicasting, from each tire monitoring device to each other tire monitoring device, a respective generated value to each other tire monitoring device; verifying, at each tire monitoring device, received generated values; and where received generated values are correctly verified, establishing secure future communication between respective tire monitoring devices using the respective second shared keys.

### BRIEF DESCRIPTION OF THE DRAWINGS

Embodiments of the invention will now be described, by way of example only, with reference to the accompanying drawings, in which:
Figure 1 shows a schematic view of a tire pressure monitoring device;
Figure 2 shows a schematic view of an aircraft incorporating a number of tire pressure monitoring devices as shown in Figure 1;
Figure 3 shows a schematic view of a network of tire pressure monitoring devices;
Figure 4 shows illustrative flashing sequences for LEDs of the tire pressure monitoring devices of Figure 1 to show device location configuration;
Figure 5A shows a user interface for initiating a device location configuration check;
Figure 5B shows a user interface for verifying a signal seen during a device location configuration check;
Figure 6 shows illustrative flashing sequences for LEDs of the tire pressure monitoring devices of Figure 1 to show device reference pressure configuration;
Figure 7A shows a user interface for initiating a device reference pressure first digit configuration check;
Figure 7B shows a user interface for verifying a signal seen during a device reference pressure first digit configuration check;
Figure 7C shows a user interface for initiating a device reference pressure second digit configuration check;
Figure 7D shows a user interface for verifying a signal seen during a device reference pressure second digit configuration check;
Figure 7E shows a user interface for initiating a device reference pressure third digit configuration check;
Figure 7F shows a user interface for verifying a signal seen during a device reference pressure third digit configuration check;
Figure 8 shows the network of tire pressure monitoring devices of Figure 3 with private-public key pairs and random numbers generated;
Figure 9 shows the network of tire pressure monitoring devices of Figure 3 broadcasting a first message to one another;
Figure 10 shows the network of tire pressure monitoring devices of Figure 3 broadcasting a second message to one another;
Figure 11 shows the network of tire pressure monitoring devices of Figure 3 broadcasting a third message to one another;
Figure 12 shows pseudocode for establishment of secure communication in the network of tire pressure monitoring devices of Figure 3; and
Figure 13 shows an example of a method according to the present disclosure.

### DETAILED DESCRIPTION

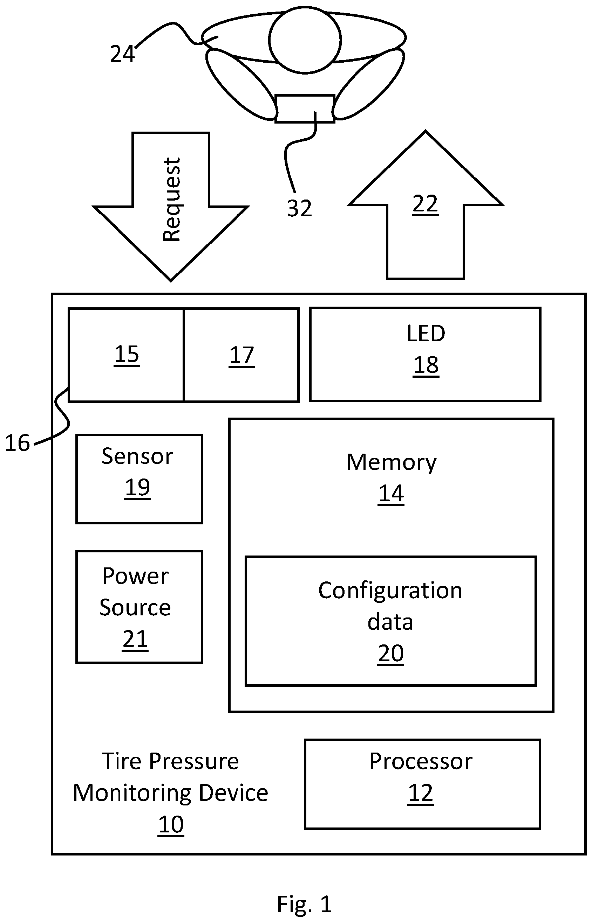

A tire pressure monitoring device 10 according to an example is shown schematically in Figure 1. The tire pressure monitoring device 10 comprises a processor 12, a memory 14, a transceiver 16, a visual indicator or display which is an LED 18 in this example, a sensor 19 and a power source 21.

The processor 12 may be any suitable processor including single and multi-core processors, an Application Specific Integrated Circuit (ASIC) or like. The processor 12 is communicatively coupled to the transceiver 16, the LED 18, the memory 20 and the sensor 21. The processor 12 is configured to generate various cryptographic parameters, as will be discussed hereinafter.

Memory 14 is a flash memory that stores configuration data 20 and also computer readable instructions for execution by the processor 12 in operation, although it will be appreciated that other types of memory may be used. The configuration data 20 can therefore be updated as required with configuration data. A reference tire pressure is stored in the configuration data 20. Additional data can also be stored in the configuration data 20, for example an aircraft identifier (such as an aircraft Tail identifier) and a wheel position.

Transceiver 16 is an appropriate transceiver capable of receiving a request to confirm the configuration data 20. In this example, the transceiver 16 comprises a first 15 short-range radio signal transceiver operating according to the NFC protocol, and a second 17 transceiver operating according to a Bluetooth low energy (BLE) communication protocol. When the transceiver 16 receives a request to confirm the configuration data 20, the processor 12 encodes the configuration data 20 stored in the memory 14 of the tire pressure monitoring device 10, and transmits a signal 22 indicative of the configuration data 20 via the LED 18 to a user 24 observing the tire pressure monitoring device 10. Here the LED 18 is a three-colour LED which is capable of displaying red, blue, and green coloured light. Other examples may use a different number of colours of light than three and/or use other colours than red, blue, and green. Still further examples may utilise a display screen, for example an LCD screen, instead of or in addition to the LED 18. In examples herein, the user 24 is a human. As the user 24 can be taken to be a trusted source, and the tire pressure monitoring device 10 is itself a trusted source, an untrusted device 32 can be used to input the user's verification of the configuration data 20, as will be discussed in more detail hereafter.

The transceiver 16 is further able to transmit and receive cryptographic parameters from the tire monitoring device 10 to other tire monitoring devices 202,204,206,208,210, as will be discussed in more detail hereafter.

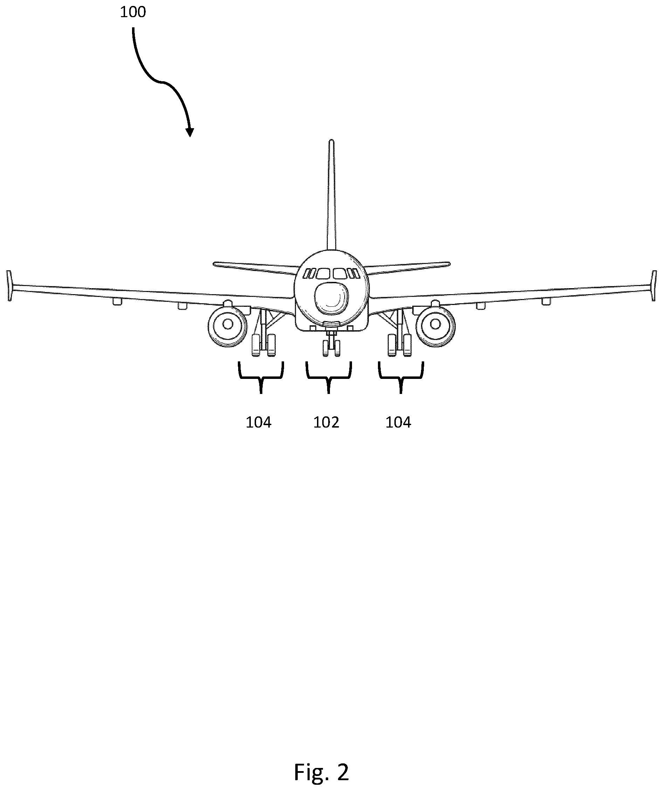

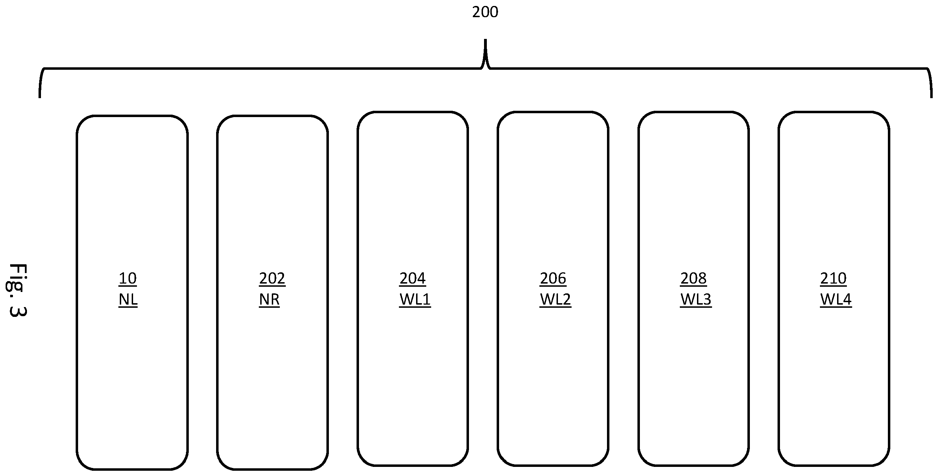

The tire pressure monitoring device 10 is installed on an aircraft 100 in use, and is one of a network 200 of tire pressure monitoring devices, with the aircraft 100 illustrated schematically in Figure 2, and the network 200 of tire pressure monitoring devices illustrated schematically in Figure 3. As an example, the aircraft 100 has a first group 102 of two nose wheels, and a second group 104 of four main landing gear wheels. Each wheel in the first 102 and second 104 groups of wheels has an associated tire pressure monitoring device, such that there are six tire pressure monitoring devices installed on the aircraft 100.

As illustrated in Figure 3, the tire pressure monitoring device 10 is a first tire pressure monitoring device utilised as left nose tire pressure monitoring device 10, with a second tire pressure monitoring device 202 being a right nose tire pressure monitoring device, a third tire pressure monitoring device 204 being a first main landing gear tire pressure monitoring device, a fourth tire pressure monitoring device 206 being a second main landing gear tire pressure monitoring device, a fifth tire pressure monitoring device 208 being a third main landing gear tire pressure monitoring device, and a sixth tire pressure monitoring device 210 being a fourth main landing gear tire pressure monitoring device. It will be appreciated that each of the second 202 through sixth 210 tire pressure monitoring devices has substantially the same structure and functionality as the first tire pressure monitoring device 10 illustrated in Figure 1. It will further be appreciated that the locations of each tire pressure monitoring device 10,202,204,206,208,210 are illustrative only, and that any of the tire pressure monitoring devices 10,202,204,206,208,210 could be used at any wheel location on an aircraft, if so desired.

When initially installed on the aircraft 100, the tire pressure monitoring devices 10,202,204,206,208,210 are not configured, ie do not store the configuration data 20, and are incapable of direct communication between one another. The user 24 therefore uses the untrusted device 32 to configure the network 200 of tire pressure monitoring devices 10,202,204,206,208,210, as will now be described.

Initially, the user 24 approaches the first tire pressure monitoring device 10 to begin configuration. The user 24 inputs the desired configuration data 20 for the first tire pressure monitoring device 10, including the wheel location and reference pressure, into the untrusted device 32, and the first tire pressure monitoring device 10 is touched with the untrusted device 32 to establish near field communication using the first transceiver 15. The desired configuration data 20 may also include an aircraft tail ID, or any other appropriate configuration parameter. The near field communication is used to uniquely identify the tire pressure monitoring device 10 to the untrusted device 32. The configuration data 20 is then transferred from the untrusted device 32 to the first tire pressure monitoring device 10 via a Bluetooth ^{®} low energy protocol using the second transceiver 17 as previously described. The configuration data 20 is then stored in the memory 14, with the first tire pressure monitoring device 10 deleting any previously stored configuration data before the newly received configuration data 20 is stored. In other examples the configuration data 20 is transferred from the untrusted device 32 to the first tire pressure monitoring device 10 via near field communication.

Once the configuration data 20 has been stored, the processor 12 generates a key pair comprising a public key 212 and a private key 214, along with a random number 216, with use of these parameters described in more detail herein.

Whilst still at the first tire pressure monitoring device 10 the user 24 checks that the configuration data 20 that has been stored correctly in the memory 14, with the task being led by an aircraft maintenance manual (AMM).

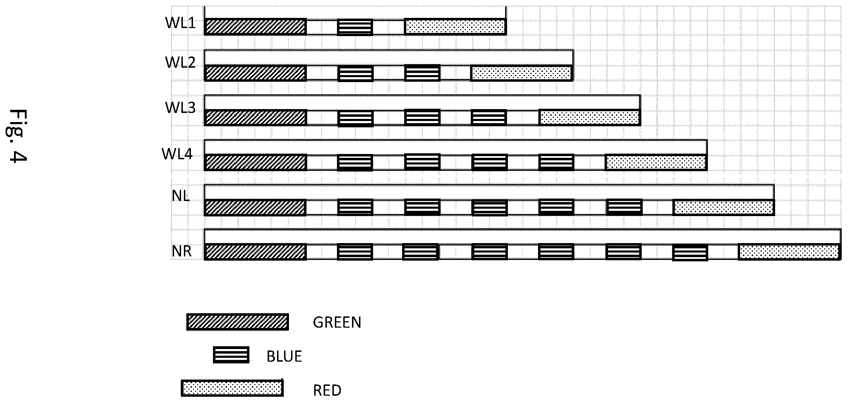

One piece of configuration data 20 to be checked is the installed location of the first tire pressure monitoring device 10. Here, as an example, an AMM task card may provide to the user a list of tire pressure monitoring device locations, eg nose left, nose right, and so on, along with an associated expected flash sequence for the LED 18 which would correctly indicate the associated tire pressure monitoring device location. In the case of the first tire pressure monitoring device 10, which is used as the left nose tire pressure monitoring device in the example previously described, an appropriate flash sequence of the LED 18 may be one green flash, followed by five blue flashes, followed by one red flash. Illustrative appropriate flash sequences (ie signals 22) for tire pressure monitoring device location are shown schematically in Figure 4.

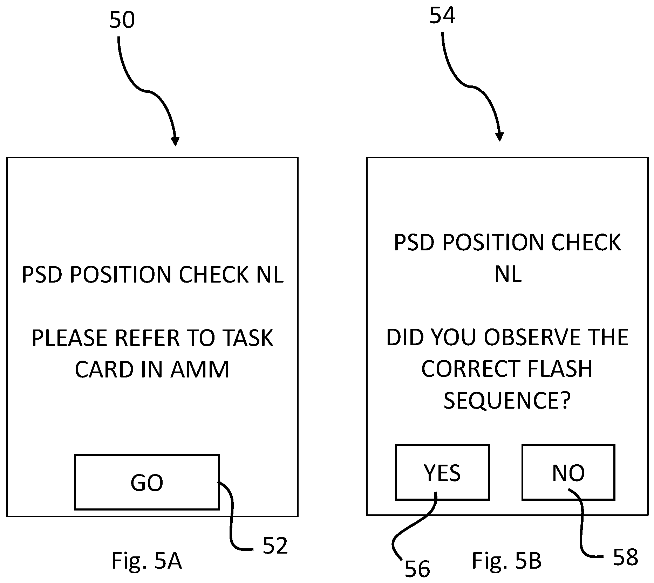

When checking the stored location of the first tire pressure monitoring device 10, the user 24 submits a request for the first tire pressure monitoring device 10 to display the stored location, via the LED 18, using a user interface of the untrusted device 32. The untrusted device 32 does not tell the first tire pressure monitoring device 10 which sequence to flash, but rather provides an instruction for the first tire pressure monitoring device 10 to flash its sequence indicative of the stored location. An exemplary user interface 50 for starting the check is shown in Figure 5A, with the user interacting with user interface element 52 to start the check. An exemplary user interface 54 for a user 24 to verify the signal 22 is shown in Figure 5B, with the user 24 interacting with user interface elements 56,58 to indicate whether the signal 22 is verified or not. If the signal 22, here indicative of stored location of the first tire pressure monitoring device 10, is not verified, then the configuration data 20 needs to be reloaded, with the process described above repeated. In other examples, if the signal 22, here indicative of stored location of the first tire pressure monitoring device 10, is not verified, the request and subsequent flash sequence is repeated, or the first tire pressure monitoring device 10, the untrusted device 32, or an application running on the untrusted device 32, is replaced.

As the user 24 can be taken to be a trusted source, and the first tire pressure monitoring device 10 is itself a trusted source, the untrusted device 32 can be used to input the user's verification of the configuration data 20. The verification can be trusted because it occurs between the user 24 (who is trusted) and tire pressure monitoring device 10 (which is trusted because of its certification to a particular DAL).

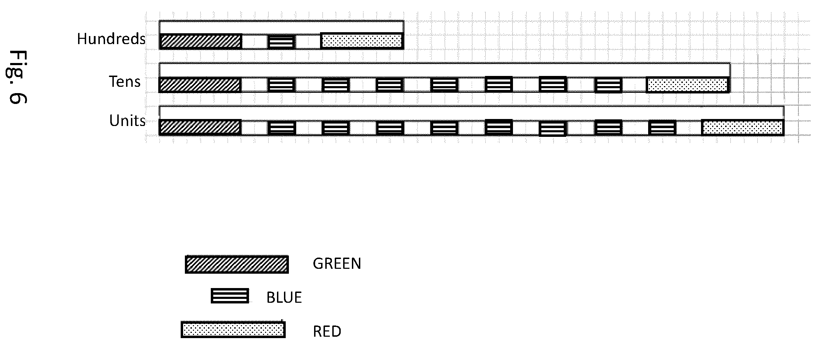

Another piece of configuration data 20 to be checked is the stored reference pressure of the first tire pressure monitoring device 10. Here, as an example, an AMM task card may provide to the user 24 a list of reference pressures for different tire pressure monitoring device locations, eg nose left, nose right, and so on, along with an associated expected flash sequence for the LED 18 which would correctly indicate the associated tire pressure monitoring device reference pressure. In the case of the first tire pressure monitoring device 10, which is used as the left nose tire pressure monitoring device in the example previously described, an appropriate reference pressure may be 178 PSI. Here separate flash sequences of the LED 18 may be performed for each digit of the reference pressure, ie a first flash sequence/signal 22 for the "hundreds" digit, a second flash sequence/signal 22 for the "tens" digit, and a third flash sequence/signal 22 for the "units" digit. The first flash sequence of the LED 18 in such a case may be one green flash, followed by one blue flash, followed by one red flash. The second flash sequence of the LED 18 in such a case may be one green flash, followed by seven blue flashes, followed by one red flash. The third flash sequence of the LED 18 in such a case may be one green flash, followed by eight blue flashes, followed by one red flash. Illustrative appropriate flash sequences (ie signals 22) for tire pressure monitoring device reference pressure are shown schematically in Figure 6.

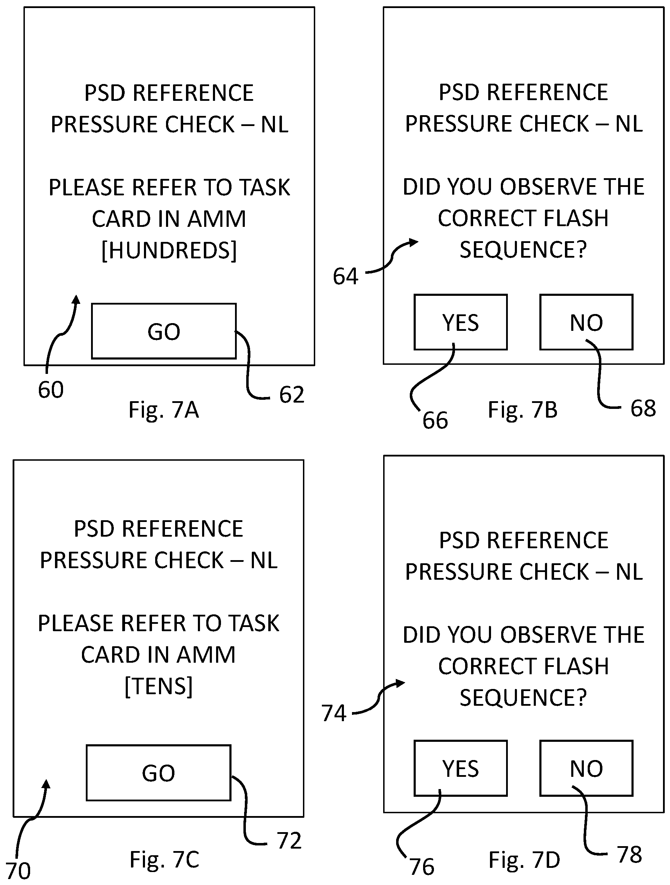

When checking the stored reference pressure of the first tire pressure monitoring device 10, the user 24 submits a request for the first tire pressure monitoring device 10 to display the stored reference, via the LED 18, using a user interface of the untrusted device 32. The untrusted device 32 does not tell the first tire pressure monitoring device 10 which sequence to flash, but rather provides an instruction for the first tire pressure monitoring device 10 to flash its sequence indicative of the stored reference pressure. An exemplary user interface 60 for starting the check for the "hundreds" digit is shown in Figure 7A, with the user 24 interacting with user interface element 62 to start the check for the "hundreds" digit. An exemplary user interface 64 for a user 24 to verify the signal 22 for the "hundreds" digit is shown in Figure 7B, with the user 24 interacting with user interface elements 66,68 to indicate whether the signal 22 is verified or not.

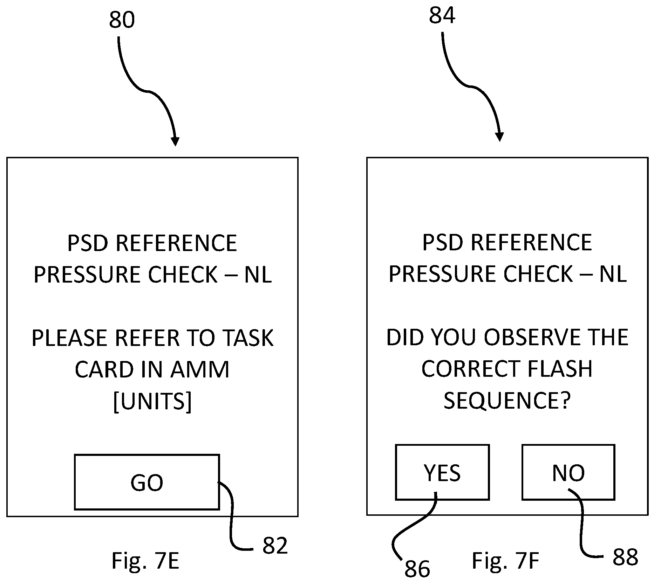

Similarly an exemplary user interface 70 for starting the check for the "tens" digit is shown in Figure 7C, with the user 24 interacting with user interface element 72 to start the check for the "tens" digit. An exemplary user interface 74 for a user 24 to verify the signal 22 for the "tens" digit is shown in Figure 7D, with the user 24 interacting with user interface elements 76,78 to indicate whether the signal 22 is verified or not. An exemplary user interface 80 for starting the check for the "units" digit is shown in Figure 7E, with the user 24 interacting with user interface element 82 to start the check for the "units" digit. An exemplary user interface 84 for a user to verify the signal 22 for the "units" digit is shown in Figure 7F, with the user 24 interacting with user interface elements 86,88 to indicate whether the signal 22 is verified or not.

Once the desired configuration data 20 has been verified for the first tire pressure monitoring device 10, the user can move to the next tire pressure monitoring device 202,204,206,208,210 and perform the same steps to ensure configuration of each of the tire pressure monitoring devices 10,202,204,206,208,210.

It has been found that it may not be necessary to check the reference pressure for each tire pressure monitoring device 10,202,204,206,208,210, and that, instead, it may be sufficient to check the reference pressure for only one tire pressure monitoring device per wheel group, i.e. one tire pressure monitoring device within the first group 102 and one tire pressure monitoring device within the second group 104.

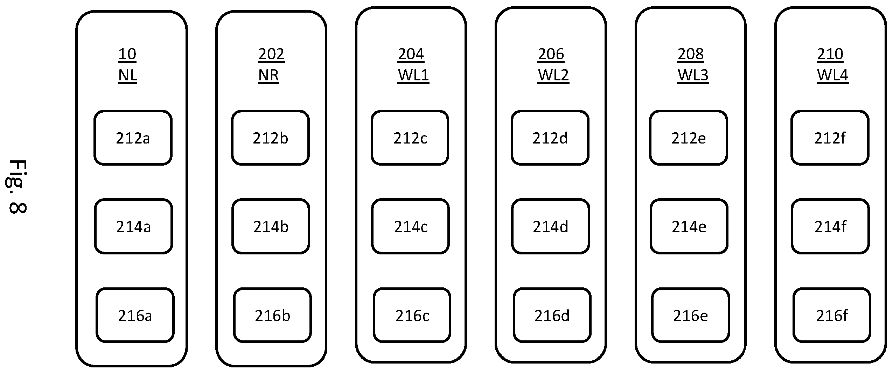

As will be appreciated from the discussion above, during the process of configuring each tire pressure monitoring device 10,202,204,206,208,210, each tire monitoring device 10,202,204,206,208,210 generates a respective key pair comprising a public key 212a-212f and a private key 214a-214f, along with a random number 216a-216f. This is illustrated schematically in Figure 8, and these cryptographic parameters are utilised to establish secure communication within the network 200 of tire pressure monitoring devices 10,202,204,206,208,210. The key pair and random number can be generated in any suitable way, in this example, the key pair is generated using any suitable cryptographic pseudo-random generator.

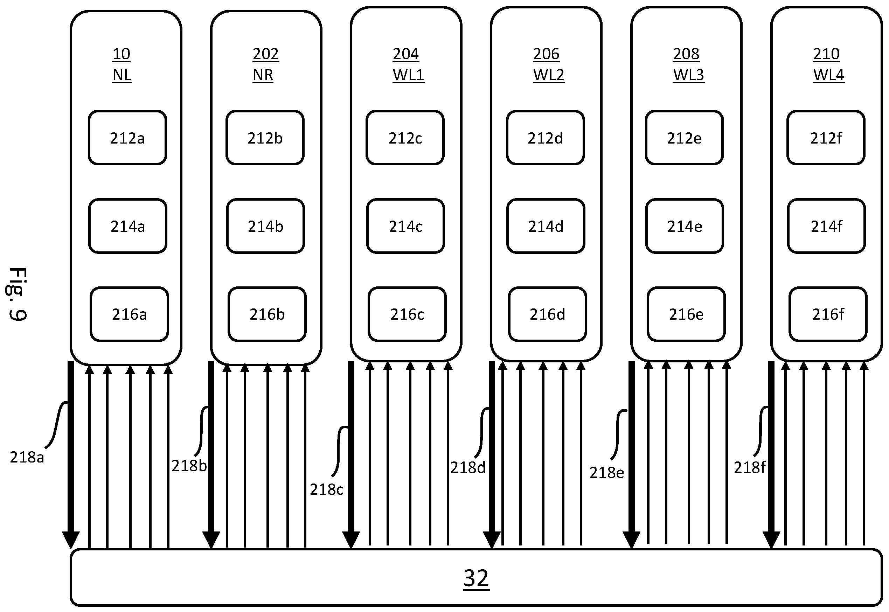

As a first step in establishing secure communication, illustrated schematically in Figure 9, each tire pressure monitoring device 10,202,204,206,208,210 broadcasts, in a respective first message 218a-218f, its public key 212a-212f and its configuration data 20 to each of the other tire pressure monitoring devices 10,202,204,206,208,210. In other words, each tire pressure monitoring device broadcasts the first message to all of the other tire pressure monitoring devices. The untrusted device 32 is used as a router for the first messages 218a-218f, with each tire pressure monitoring device 10,202,204,206,208,210 receiving the other first messages 218a-218f via the untrusted device. Here bold arrows denote sent messages, whilst non-bold arrows denote received messages. The first messages 218a-218f are broadcast and received via the second receiver 17 of each tire pressure monitoring device 10,202,204,206,208,210, using a BLE protocol. Once all first messages 218a-218f are sent and received, each tire pressure monitoring device 10,202,204,206,208,210 knows the public key 212a-212f and configuration data 20 of each other tire pressure monitoring device 10,202,204,206,208,210. By broadcasting the first messages 218a-218f from the tire pressure monitoring devices 10,202,204,206,208,210, a number of messages sent by each tire pressure monitoring device 10,202,204,206,208,210 may be reduced compared to, for example, an arrangement where each tire pressure monitoring device 10,202,204,206,208,210 unicasts its public key 212a-212f and/or its configuration data 20 to each other tire pressure monitoring device 10,202,204,206,208,210. Through the use of a broadcast message, a single transmitted message from a tire monitoring device may be received by a plurality of other devices, reducing message traffic and saving power. As illustrated in Figure 9, a single transmitted message is received by all of the other tire monitoring devices.

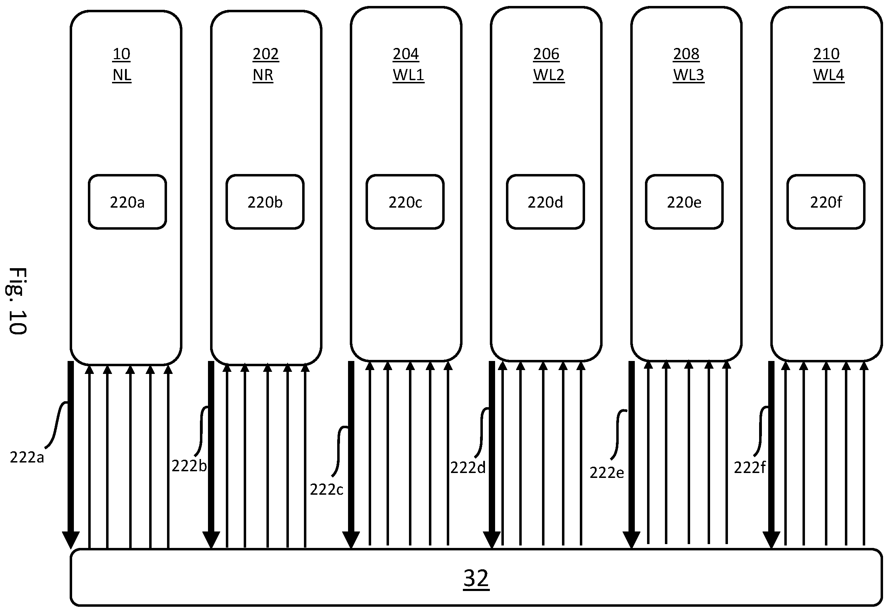

As a second step in establishing secure communication, illustrated schematically in Figure 10, the processor 12 of each tire pressure monitoring device 10,202,204,206,208,210 uses its own random number 216-216f, the public keys 212a-212f both generated and received by the tire pressure monitoring device 10,202,204,206,208,210, and its own configuration data 20, to generate a cryptographic commitment 220a-220f. The cryptographic commitment can be generated in any suitable way, in this example it is generated using a hash-based concurrent non-malleable commitment. Each tire pressure monitoring device 10,202,204,206,208,210 broadcasts, in a second message 222a-222f, its respective cryptographic commitment 220a-220f to each of the other tire pressure monitoring devices 10,202,204,206,208,210.

The untrusted device 32 is used as a router for the second messages 222a-222f, with each tire pressure monitoring device 10,202,204,206,208,210 receiving the other second messages 222a-222f via the untrusted device 32. Here bold arrows denote sent messages, whilst non-bold arrows denote received messages. The second messages 222a-222f are broadcast and received via the second receiver 17 of each tire pressure monitoring device 10,202,204,206,208,210, using a BLE protocol. Once all second messages 222a-222f are sent and received, each tire pressure monitoring device 10,202,204,206,208,210 knows the cryptographic commitment 220a-220f of each other tire pressure monitoring device 10,202,204,206,208,210. By broadcasting the second messages 222a-222f from the tire pressure monitoring devices 10,202,204,206,208,210, a number of messages sent by each tire pressure monitoring device 10,202,204,206,208,210 may be reduced compared to, for example, an arrangement where each tire pressure monitoring device 10,202,204,206,208,210 unicasts its cryptographic commitment 220a-220f to each other tire pressure monitoring device 10,202,204,206,208,210.

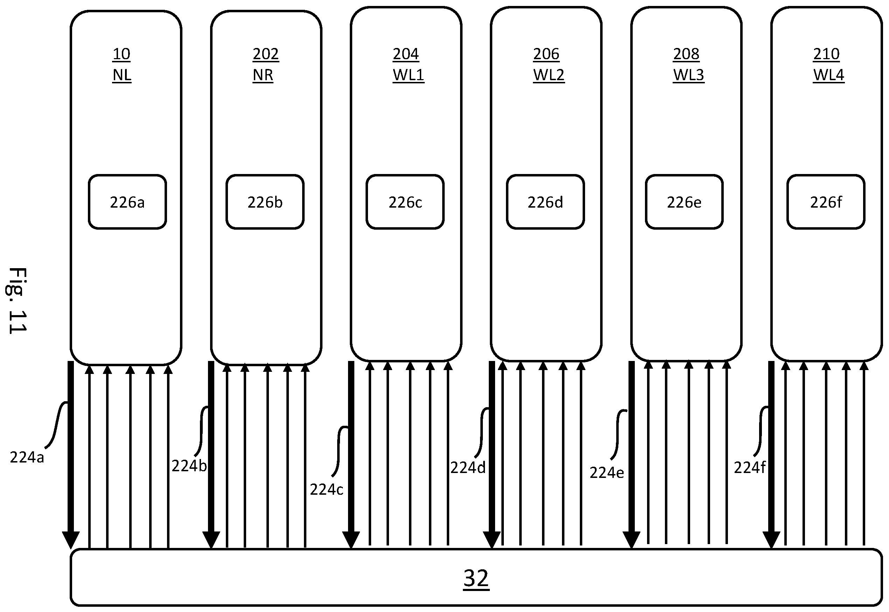

As a third step in establishing secure communication, illustrated schematically in Figure 11, each tire pressure monitoring device 10,202,204,206,208,210 broadcasts, in a respective third message 224a-224f, an input 226a-226f to open the respective cryptographic commitment 220a-220f, to each other tire pressure monitoring device 10,202,204,206,208,210. Here bold arrows denote sent messages, whilst non-bold arrows denote received messages. The third messages 224a-224f are broadcast and received via the second receiver 17 of each tire pressure monitoring device 10,202,204,206,208,210, using a BLE protocol. Once all third messages 224a-224f are sent and received, each tire pressure monitoring device 10,202,204,206,208,210 can open and verify the cryptographic commitments 220a-220f received from the other tire pressure monitoring devices 10,202,204,206,208,210. By broadcasting the third messages 224a-224f from the tire pressure monitoring devices 10,202,204,206,208,210, a number of messages sent by each tire pressure monitoring device 10,202,204,206,208,210 may be reduced compared to, for example, an arrangement where each tire pressure monitoring device 10,202,204,206,208,210 unicasts its input 226a-226f to each other tire pressure monitoring device 10,202,204,206,208,210.

Where a cryptographic commitment 220a-220f cannot be verified, the establishment of secure communication is aborted, and an error message is communicated to the untrusted device 32. For example, the error message could be communicated using Bluetooth ^{®} or NFC to the untrusted device 32 for display by the untrusted device 32. Alternatively, or additionally, the error message could be communicated using the LED of the tire pressure monitoring device, such as by lighting the LED continuously red.

Where the cryptographic commitments 220a-220f are all verified, each tire pressure monitoring device 10,202,204,206,208,210 generates, for each other tire pressure monitoring device 10,202,204,206,208,210, a seed for a pseudo-random generator. The generation of the seed comprises utilising a hash function with inputs of the private key 214a-214f of the tire pressure monitoring device 10,202,204,206,208,210 performing the generation, and the public key 212a-212f of the tire pressure monitoring device 10,202,204,206,208,210 for which generation is being performed.

Using the pseudo random generator, each tire pressure monitoring device 10,202,204,206,208,210 generates a shared key pair comprising a first shared key k, and a second shared key k', using any suitable cryptographic pseudo-random generator such as AES in counter mode.

Each tire pressure monitoring device 10,202,204,206,208,210 then generates, for each other tire pressure monitoring device 10,202,204,206,208,210, a value using a pseudo-random function based on the first shared key k, and associated random numbers 216a-216f and the respective public keys 212a-212f of the two tire pressure monitoring devices 10,202,204,206,208,210 in question as inputs to the pseudo-random function. The pseudo-random function may comprise any suitable cryptographic pseudo-random function such as HMAC.

Each tire pressure monitoring device 10,202,204,206,208,210 sends its respective values to the other tire pressure monitoring devices 10,202,204,206,208,210, with each tire pressure monitoring device 10,202,204,206,208,210 checking validity of the received values using the same pseudo-random function based on the first shared key k.

Where a value cannot be verified, the establishment of secure communication is aborted, and an error message is communicated to the untrusted device 32. For example the error message could be communicated using Bluetooth ^{®} or NFC to the untrusted device 32 for display by the untrusted device 32. Alternatively, or additionally, the error message could be communicated using the LED of the tire pressure monitoring device, such as by lighting the LED continuously red.

Where values are verified, the respective tire pressure monitoring devices 10,202,204,206,208,210 use the respective second shared keys k' for secure future communication. Although the establishment of the secure communication required the use of unencrypted messages between the tire pressure monitoring devices, the untrusted device 32 cannot know the second shared keys k' because generating these requires knowledge of the private keys that are not shared.

In such a manner secure communication can be established between tire pressure monitoring devices 10,202,204,206,208,210 of the network 200, i.e. with secure communication established on a pair-wise basis. The untrusted device does not know the second shared keys k' used for communication, and the numbers of messages required to be exchanged is reduced by the use of broadcast messages. Furthermore, the secure communication does not require a pre-installed key or the like on the tire pressure monitoring devices 10, 202, 204, 206, 208, 210.

Where secure communication has been established, the tire pressure monitoring devices 10,202,204,206,208,210 can be used to communicate to the user that each tire pressure monitoring device 10,202,204,206,208,210 shares the same security code. Here each tire pressure monitoring device 10,202,204,206,208,210 generates a numerical value, representing a security code, that can be communicated to the user 24 by flashing the LED 18 in a manner similar to that previously described in relation to the checks of configuration data 20. The numerical value in some examples comprises a truncated hash of the configuration data 20, public keys 212a-212f and random numbers 216a-216f, such as a truncated hash function with an input of a concatenation of the configuration data 20, public keys 212a-212f and random numbers 216a-216f. Any suitable hash function can be used, such as SHA-3. As each of the tire pressure monitoring devices 10,202,204,206,208,210 knows the same configuration data 20, public keys 212a-212f and random numbers 216a-216f, the truncated hash, and hence the security code, should be the same for each tire pressure monitoring device 10,202,204,206,208,210.

Checking of security codes is, in some examples, led by the aircraft maintenance manual (AMM), with an AMM task card being utilised by the user 24 to fill in security codes indicated by the received signals 22. Similar to the signals for reference pressure discussed in relation to Figures 6 and 7A-7F, signals 22 indicative of security codes communicated by flashing the LEDs 18 of the tire pressure monitoring devices 10,202,204,206,208,210 may comprise three digits, with each digit, ie "hundreds", "tens", "units" flashed using a separate signal 22. Each separate signal 22 may comprise a green flash to start, a red flash to end, and a number of blue flashes intermediate the green and red flashes to indicate the digit to the user 24. The AMM may provide the option for a user to indicate whether an observed flash is short (i.e. quick) or long (i.e. slow). User interfaces on the untrusted device 32 may be used to initiate transmission of a signal 22, and to confirm once a signal 22 has been received by the user 24.

Where the security codes flashed by the LEDs 18 of each tire pressure monitoring device 10,202,204,206,208,210 match, successful configuration may be determined. Where any of the security codes do not match, this is considered indicative of incorrect configuration, and re-configuration of the network 200 of tire pressure monitoring devices 10,202,204,206,208,210 needs to take place.

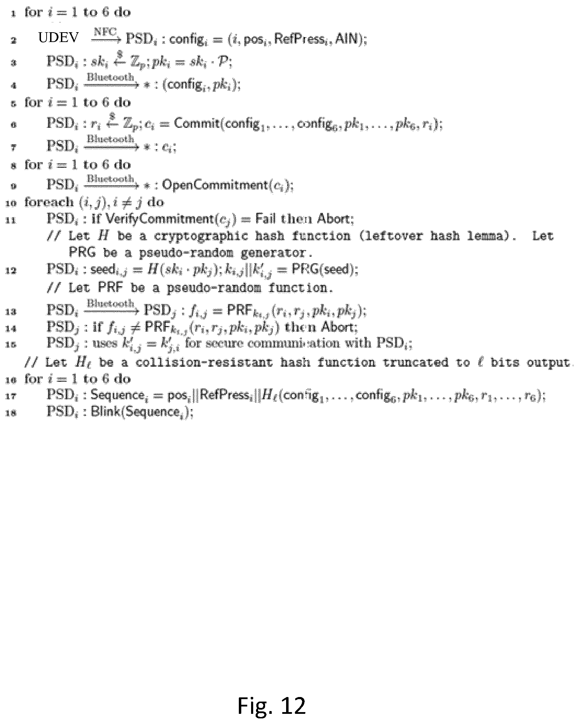

Pseudo code illustrating the steps involved in establishing secure communication and checking security codes is illustrated in Figure 12. Here PSD refers to a tire pressure sensing device 10,202,204,206,208,210, UDEV refers to the untrusted device 32, pk denotes the public keys 212a-212f, sk denotes the private keys 214a-214f, r denotes the random numbers 216a-216f, and config denotes the relevant configuration data 20.

As mentioned above, in some examples broadcasting messages from a tire pressure monitoring device 10,202,204,206,208,210 to the other tire pressure monitoring devices 10,202,204,206,208,210 may reduce message count compared to a similar arrangement where each tire pressure monitoring device 10,202,204,206,208,210 unicasts a message to each other tire pressure monitoring device 10,202,204,206,208,210. Such methods may, in some examples, be thought of as comprising broadcasting, from each tire monitoring device 10,202,204,206,208,210 to each other tire monitoring device 10,202,204,206,208,210, a message comprising a cryptographic parameter generated by that respective tire monitoring device 10,202,204,206,208,210.

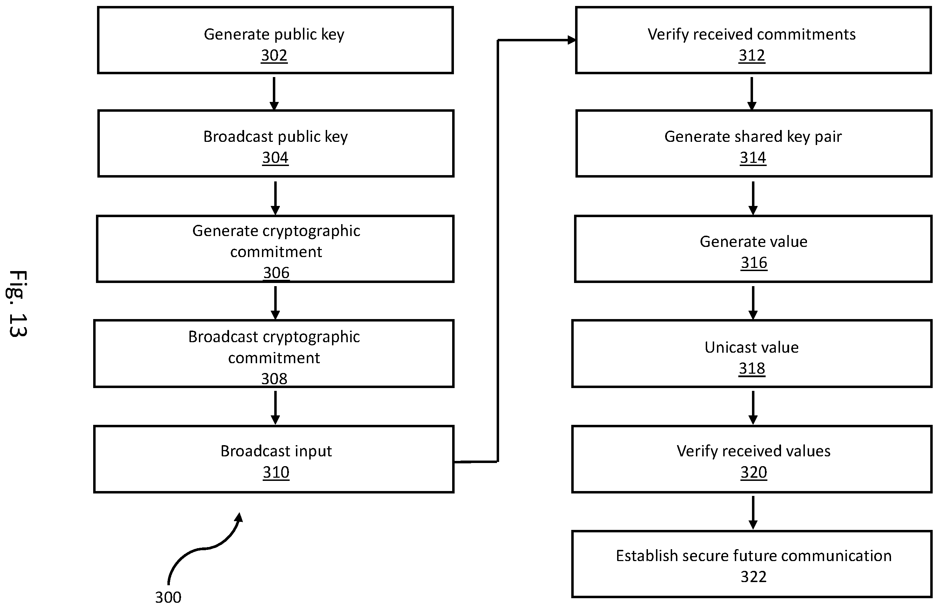

A method 300 illustrating steps involved in establishing secure communication in a network of tire pressure monitoring devices, in accordance with the previously described examples, is illustrated in the flow diagram of Figure 13.

The method 300 comprises generating 302, at each tire monitoring device, a public key, and broadcasting 304, from each tire monitoring device to each other tire monitoring device, the respective public keys. The method 300 comprises generating 306, at each tire monitoring device, a cryptographic commitment using the public keys generated and received by the respective tire monitoring device, and broadcasting 308, from each tire monitoring device to each other tire monitoring device, the respective cryptographic commitments. The method 300 comprises broadcasting 310, from each tire monitoring device to each other tire monitoring device, an input to open the cryptographic commitment generated by that tire monitoring device, and verifying 312, at each tire monitoring device, the commitments received by the respective tire monitoring device using the respective inputs.

The method 300 comprises generating 314, at each tire monitoring device, a shared key pair for the tire monitoring device and each other tire monitoring device, each shared key pair comprising a first shared key and a second shared key, and generating 316, at each tire monitoring device, using a function based on the respective first shared keys, a value to communicate to each other tire monitoring device. The method 300 comprises unicasting 318, from each tire monitoring device to each other tire monitoring device, a respective generated value to each other tire monitoring device, and verifying 320, at each tire monitoring device, received generated values. Where received generated values are correctly verified, the method 300 comprises establishing 322 secure future communication between respective tire monitoring devices using the respective second shared keys. In some examples, the method 300 may then comprise a step of performing a tire pressure check using the generated cryptographic keys, such that data transferred between the tire monitoring devices is secured.

By utilising the method 300, secure communication between tire pressure monitoring devices can be established, whilst reducing message count via use of broadcasting rather than unicasting. For example, if a protocol similar to Bluetooth's numeric comparison mode were used to establish pairwise keys between the tire monitoring devices, then to establish keys between n tire monitoring devices would require n * (n-1)/2 executions of the Bluetooth numeric comparison protocol. This would imply that each of the n tire monitoring devices sends (in the order of) n messages, and the user would have to verify each of the n*(n-1)/2 keys manually. In contrast, with the method 300, each tire monitoring device only sends (in the order of) one single message. The method 300 also enables a high level of security to be maintained in setting-up the secure communication.

While the use of the untrusted router has been described above to relay messages, this may be omitted in other examples. For example, a router may be omitted altogether and replaced with direct communication mesh communication between at least some tire pressure monitoring devices. Such a system still benefits from the establishment of secure communication which is not at risk of keys being determined from eavesdropping.

It will be appreciated that the use of broadcast messages can be applied to methods to establish secure communication between devices other than the specific examples described herein. For example, when a plurality of devices are all establishing secure communication at the same time, broadcast messages may be useful to reduce message traffic when a plurality of devices all need to receive the same piece of information (such as a device's public key). Alternatively, or additionally, broadcast messages can reduce message traffic by combining messages for multiple recipients into a single message, with each recipient retrieving its part of the combined message.

It is to noted that the term "or" as used herein is to be interpreted to mean "and/or", unless expressly stated otherwise.

## Claims

1. A method (300) of exchanging cryptographic parameters in a network (200) of tire monitoring devices (10, 202, 204, 206, 208, 210), the method comprising broadcasting (308), from each tire monitoring device (10, 202, 204, 206, 208, 210) to a plurality of other tire monitoring devices (10, 202, 204, 206, 208, 210), a message comprising a cryptographic parameter generated by that respective tire monitoring device (10, 202, 204, 206, 208, 210).

2. A method according to Claim 1, wherein the cryptographic parameter comprises a cryptographic commitment (220a-220f) generated by the respective tire monitoring device (10, 202, 204, 206, 208, 210).

3. A method according to Claim 2, wherein the method comprises broadcasting (310), from each tire monitoring device (10, 202, 204, 206, 208, 210) to a plurality of other tire monitoring devices (10, 202, 204, 206, 208, 210), an input (226a-226f) to open the cryptographic commitment (220a-220f) generated by the respective tire monitoring device (10, 202, 204, 206, 208, 210), and verifying (312), at each tire monitoring device (10, 202, 204, 206, 208, 210), the commitments (220a-220f) received by the respective tire monitoring device (10, 202, 204, 206, 208, 210) using the respective inputs.

4. A method according to any preceding claim, wherein the method comprises broadcasting (304), from each tire monitoring device (10, 202, 204, 206, 208, 210) to a plurality of other tire monitoring devices (10, 202, 204, 206, 208, 210), a public key (212a-212f) generated by the respective tire monitoring device (10, 202, 204, 206, 208, 210), and generating (306), at each tire monitoring device (10, 202, 204, 206, 208, 210), the cryptographic parameter using the public keys (212a-212f) generated and received by the respective tire monitoring device (10, 202, 204, 206, 208, 210).

5. A method according to any preceding claim, wherein the method comprises generating, at each tire monitoring device (10, 202, 204, 206, 208, 210), a random number (216a-216f), and generating (306) the cryptographic parameter using the random number (216a-216f) generated by the respective tire monitoring device (10, 202, 204, 206, 208, 210).

6. A method according to any preceding claim, wherein the method comprises broadcasting, from each tire monitoring device (10, 202, 204, 206, 208, 210) to a plurality of other tire monitoring devices (10, 202, 204, 206, 208, 210), configuration data (20) of that tire monitoring device (10, 202, 204, 206, 208, 210), and generating the cryptographic parameter comprises using the configuration data (20).

7. A method (300) according to any preceding claim, wherein the method comprises:
generating (314), at each tire monitoring device (10, 202, 204, 206, 208, 210), a shared key pair for the tire monitoring device (10, 202, 204, 206, 208, 210) and each other tire monitoring device (10, 202, 204, 206, 208, 210); each shared key pair comprising a first shared key (k) and a second shared key (k');
generating (316), at each tire monitoring device (10, 202, 204, 206, 208, 210), using a function based on the respective first shared keys, a value to communicate to each other tire monitoring device (10, 202, 204, 206, 208, 210);
transmitting (318), from each tire monitoring device (10, 202, 204, 206, 208, 210) to each other tire monitoring device (10, 202, 204, 206, 208, 210), a respective generated value;
verifying (320), at each tire monitoring device (10, 202, 204, 206, 208, 210), received generated values; and
where received generated values are correctly verified, establishing (322) secure future communication between respective tire monitoring devices (10, 202, 204, 206, 208, 210) using the respective second shared keys.

8. A method according Claim 7, wherein generating (316) the value to communicate to each other tire monitoring device (10, 202, 204, 206, 208, 210) using a function based on the respective first shared keys comprises using any of a random number (216a-216f), a public key (212a-212f) generated by that tire monitoring device (10, 202, 204, 206, 208, 210), and a public key (212a-212f) generated by the other tire monitoring device (10, 202, 204, 206, 208, 210) for which the value is generated, as inputs for the function.

9. A method according to Claim 7 or Claim 8, wherein the method comprises generating, at each tire monitoring device (10, 202, 204, 206, 208, 210), a seed for a pseudo-random generator for each other tire monitoring device (10, 202, 204, 206, 208, 210), and generating, at each tire monitoring device (10, 202, 204, 206, 208, 210), the shared key pair for the tire monitoring device (10, 202, 204, 206, 208, 210) and each other tire monitoring device (10, 202, 204, 206, 208, 210) using the pseudo-random generator.

10. A method according to any preceding claim, wherein the plurality of tire monitoring devices (10, 202, 204, 206, 208, 210) comprises at least three tire monitoring devices.

11. A method according to any preceding claim, wherein the method comprises providing, at each tire monitoring device (10, 202, 204, 206, 208, 210), a signal (22) indicative of a state of the tire monitoring device (10, 202, 204, 206, 208, 210) and verifying, by an operator, whether each signal (22) matches each other signal (22).

12. A method according to Claim 11, wherein the signal (22) indicative of a state of the tire monitoring device (10, 202, 204, 206, 208, 210) comprises a signal (22) based on configuration data (20) of the tire monitoring device (10, 202, 204, 206, 208, 210), public keys (212a-212f) generated and received by the tire monitoring device (10, 202, 204, 206, 208, 210), and random numbers (216a-216f) generated and received by the tire monitoring device (10, 202, 204, 206, 208, 210).

13. A method according to any preceding claim, where the plurality of tire monitoring devices (10, 202, 204, 206, 208, 210) comprise a plurality of tire pressure monitoring devices (10, 202, 204, 206, 208, 210).

14. A tire monitoring device (10) comprising a communication module (16) for communication with a plurality of other tire monitoring devices (202, 204, 206, 208, 210), and a processor (12) configured to generate a cryptographic parameter, the communication module (16) configured to broadcast a message (218a) comprising the cryptographic parameter to at least two of the plurality of other tire monitoring devices (202, 204, 206, 208, 210); wherein the cryptographic parameter comprises a cryptographic commitment (220a) generated by the tire monitoring device (10).

15. A tire monitoring device according to Claim 14, where the communication module (16) is configured to receive, via a broadcast message (218b-f), cryptographic parameters generated by other ones (202, 204, 206, 208, 210) of the plurality of other tire monitoring devices.

16. An aircraft system comprising a plurality of tire monitoring devices (10, 202, 204, 206, 208, 210) according to Claim 14 or Claim 15.

17. An aircraft system comprising a plurality of tire monitoring devices (10, 202, 204, 206, 208, 210) configured to operate according to the method of any of claims 1 to 13.

18. An aircraft (100) comprising the aircraft system according to Claim 16 or 17.

## Patentansprüche

1. Verfahren (300) zum Austauschen kryptografischer Parameter in einem Netz (200) von Reifenüberwachungsvorrichtungen (10, 202, 204, 206, 208, 210), wobei das Verfahren umfasst, von jeder Reifenüberwachungsvorrichtung (10, 202, 204, 206, 208, 210) an mehrere andere Reifenüberwachungsvorrichtungen (10, 202, 204, 206, 208, 210) eine Nachricht zu senden (308), die einen kryptografischen Parameter umfasst, der durch diese jeweilige Reifenüberwachungsvorrichtung (10, 202, 204, 206, 208, 210) erzeugt wird.

2. Verfahren nach Anspruch 1, wobei der kryptografische Parameter eine kryptografische Verpflichtung (220a-220f) umfasst, die durch die jeweilige Reifenüberwachungsvorrichtung (10, 202, 204, 206, 208, 210) erzeugt wird.

3. Verfahren nach Anspruch 2, wobei das Verfahren umfasst, von jeder Reifenüberwachungsvorrichtung (10, 202, 204, 206, 208, 210) an mehrere andere Reifenüberwachungsvorrichtungen (10, 202, 204, 206, 208, 210) eine Eingabe (226a-226f) zu senden (310), um die kryptografische Verpflichtung (220a-220f), die durch die jeweilige Reifenüberwachungsvorrichtung (10, 202, 204, 206, 208, 210) erzeugt wird, zu öffnen, und an jeder Reifenüberwachungsvorrichtung (10, 202, 204, 206, 208, 210) die Verpflichtungen (220a-220f), die durch die jeweilige Reifenüberwachungsvorrichtung (10, 202, 204, 206, 208, 210) empfangen werden, unter Verwendung der jeweiligen Eingaben zu überprüfen (312).

4. Verfahren nach einem vorhergehenden Anspruch, wobei das Verfahren umfasst, von jeder Reifenüberwachungsvorrichtung (10, 202, 204, 206, 208, 210) an mehrere andere Reifenüberwachungsvorrichtungen (10, 202, 204, 206, 208, 210) einen öffentlichen Schlüssel (212a-212f) zu senden (304), der durch die jeweilige Reifenüberwachungsvorrichtung (10, 202, 204, 206, 208, 210) erzeugt wird, und an jeder Reifenüberwachungsvorrichtung (10, 202, 204, 206, 208, 210) den kryptografischen Parameter unter Verwendung der öffentlichen Schlüssel (212a-212f), die durch die jeweilige Reifenüberwachungsvorrichtung (10, 202, 204, 206, 208, 210) erzeugt und empfangen werden, zu erzeugen (306).

5. Verfahren nach einem vorhergehenden Anspruch, wobei das Verfahren umfasst, an jeder Reifenüberwachungsvorrichtung (10, 202, 204, 206, 208, 210) eine Zufallszahl (216a-216f) zu erzeugen und den kryptografischen Parameter unter Verwendung der Zufallszahl (216a-216f), die durch die jeweilige Reifenüberwachungsvorrichtung (10, 202, 204, 206, 208, 210) erzeugt wird, zu erzeugen (306).

6. Verfahren nach einem vorhergehenden Anspruch, wobei das Verfahren umfasst, von jeder Reifenüberwachungsvorrichtung (10, 202, 204, 206, 208, 210) an mehrere andere Reifenüberwachungsvorrichtungen (10, 202, 204, 206, 208, 210) Konfigurationsdaten (20) dieser Reifenüberwachungsvorrichtung (10, 202, 204, 206, 208, 210) zu senden und den kryptografischen Parameter unter Verwendung der Konfigurationsdaten (20) zu erzeugen.

7. Verfahren (300) nach einem vorhergehenden Anspruch, wobei das Verfahren Folgendes umfasst:
Erzeugen (314) an jeder Reifenüberwachungsvorrichtung (10, 202, 204, 206, 208, 210) eines gemeinsam genutzten Schlüsselpaars für die Reifenüberwachungsvorrichtung (10, 202, 204, 206, 208, 210) und jede andere Reifenüberwachungsvorrichtung (10, 202, 204, 206, 208, 210); wobei jedes gemeinsam genutzte Schlüsselpaar einen ersten gemeinsam genutzten Schlüssel (k) und einen zweiten gemeinsam genutzten Schlüssel (k') umfasst;
Erzeugen (316) an jeder Reifenüberwachungsvorrichtung (10, 202, 204, 206, 208, 210) unter Verwendung einer Funktion, die auf den jeweiligen ersten gemeinsam genutzten Schlüsseln beruht, eines an jede andere Reifenüberwachungsvorrichtung (10, 202, 204, 206, 208, 210) zu kommunizierenden Werts;
Senden (318) von jeder Reifenüberwachungsvorrichtung (10, 202, 204, 206, 208, 210) an jede andere Reifenüberwachungsvorrichtung (10, 202, 204, 206, 208, 210) eines jeweiligen erzeugten Werts;
Überprüfen (320) an jeder Reifenüberwachungsvorrichtung (10, 202, 204, 206, 208, 210) der empfangenen erzeugten Werte; und
dann, wenn empfangene erzeugte Werte korrekt überprüft werden, Einrichten (322) einer sicheren zukünftigen Kommunikation zwischen jeweiligen Reifenüberwachungsvorrichtungen (10, 202, 204, 206, 208, 210) unter Verwendung der jeweiligen zweiten gemeinsam genutzten Schlüssel.

8. Verfahren nach Anspruch 7, wobei das Erzeugen (316) des an jede andere Reifenüberwachungsvorrichtung (10, 202, 204, 206, 208, 210) zu kommunizierenden Werts unter Verwendung einer Funktion, die auf den jeweiligen ersten gemeinsam genutzten Schlüsseln beruht, umfasst, ein beliebiges einer Zufallszahl (216a-216f), eines öffentlichen Schlüssels (212a-212f), der durch diese Reifenüberwachungsvorrichtung (10, 202, 204, 206, 208, 210) erzeugt wird, und eines öffentlichen Schlüssels (212a-212f), der durch die andere Reifenüberwachungsvorrichtung (10, 202, 204, 206, 208, 210) erzeugt wird, für die der Wert erzeugt wird, als Eingaben für die Funktion zu verwenden.

9. Verfahren nach Anspruch 7 oder Anspruch 8, wobei das Verfahren umfasst, an jeder Reifenüberwachungsvorrichtung (10, 202, 204, 206, 208, 210) einen Keim für einen pseudo-zufälligen Generator für jede andere Reifenüberwachungsvorrichtung (10, 202, 204, 206, 208, 210) zu erzeugen und an jeder Reifenüberwachungsvorrichtung (10, 202, 204, 206, 208, 210) das gemeinsam genutzte Schlüsselpaar für die Reifenüberwachungsvorrichtung (10, 202, 204, 206, 208, 210) und jede andere Reifenüberwachungsvorrichtung (10, 202, 204, 206, 208, 210) unter Verwendung des pseudo-zufälligen Generators zu erzeugen.

10. Verfahren nach einem vorhergehenden Anspruch, wobei die mehreren Reifenüberwachungsvorrichtungen (10, 202, 204, 206, 208, 210) mindestens drei Reifenüberwachungsvorrichtungen umfassen.

11. Verfahren nach einem vorhergehenden Anspruch, wobei das Verfahren umfasst, an jeder Reifenüberwachungsvorrichtung (10, 202, 204, 206, 208, 210) ein Signal (22) bereitzustellen, das einen Zustand der Reifenüberwachungsvorrichtung (10, 202, 204, 206, 208, 210) angibt, und durch eine Bedienperson zu überprüfen, ob jedes Signal (22) mit einem anderen Signal (22) übereinstimmt.

12. Verfahren nach Anspruch 11, wobei das Signal (22), das einen Zustand der Reifenüberwachungsvorrichtung (10, 202, 204, 206, 208, 210) angibt, ein Signal (22) umfasst, das auf Konfigurationsdaten (20) der Reifenüberwachungsvorrichtung (10, 202, 204, 206, 208, 210), öffentlichen Schlüsseln (212a-212f), die durch die Reifenüberwachungsvorrichtung (10, 202, 204, 206, 208, 210) erzeugt und empfangen werden, und Zufallszahlen (216a-216f), die durch die Reifenüberwachungsvorrichtung (10, 202, 204, 206, 208, 210) erzeugt und empfangen werden, beruht.

13. Verfahren nach einem vorhergehenden Anspruch, wobei die mehreren Reifenüberwachungsvorrichtungen (10, 202, 204, 206, 208, 210) mehrere Reifenüberwachungsvorrichtungen (10, 202, 204, 206, 208, 210) umfassen.

14. Reifenüberwachungsvorrichtung (10), die ein Kommunikationsmodul (16) für eine Kommunikation mit mehreren anderen Reifenüberwachungsvorrichtungen (202, 204, 206, 208, 210) und einen Prozessor (12), der konfiguriert ist, einen kryptografischen Parameter zu erzeugen, umfasst, wobei das Kommunikationsmodul (16) konfiguriert ist, eine Nachricht (218a), die den kryptografischen Parameter umfasst, an mindestens zwei der mehreren anderen Reifenüberwachungsvorrichtungen (202, 204, 206, 208, 210) zu senden; wobei der kryptografische Parameter eine kryptografische Verpflichtung (220a) umfasst, die durch die Reifenüberwachungsvorrichtung (10) erzeugt wird.

15. Reifenüberwachungsvorrichtung nach Anspruch 14, wobei das Kommunikationsmodul (16) konfiguriert ist, über eine Rundfunknachricht (218b-f) kryptografische Parameter zu empfangen, die durch andere (202, 204, 206, 208, 210) der mehreren anderen Reifenüberwachungsvorrichtungen erzeugt werden.

16. Flugzeugsystem, das mehrere Reifenüberwachungsvorrichtungen (10, 202, 204, 206, 208, 210) nach Anspruch 14 oder Anspruch 15 umfasst.

17. Flugzeugsystem, das mehrere Reifenüberwachungsvorrichtungen (10, 202, 204, 206, 208, 210) umfasst, die konfiguriert sind, gemäß dem Verfahren nach einem der Ansprüche 1 bis 13 zu arbeiten.

18. Flugzeug (100), das das Flugzeugsystem nach Anspruch 16 oder 17 umfasst.

## Revendications

1. Procédé (300) d'échange de paramètres cryptographiques dans un réseau (200) de dispositifs de surveillance de pneu (10, 202, 204, 206, 208, 210), le procédé comprenant la diffusion (308), à partir de chaque dispositif de surveillance de pneu (10, 202, 204, 206, 208, 210) vers une pluralité d'autres dispositifs de surveillance de pneu (10, 202, 204, 206, 208, 210), d'un message comprenant un paramètre cryptographique généré par ce dispositif de surveillance de pneu (10, 202, 204, 206, 208, 210) respectif.

2. Procédé selon la revendication 1, dans lequel le paramètre cryptographique comprend un engagement cryptographique (220a-220f) généré par le dispositif de surveillance de pneu (10, 202, 204, 206, 208, 210) respectif.

3. Procédé selon la revendication 2, le procédé comprenant la diffusion (310), à partir de chaque dispositif de surveillance de pneu (10, 202, 204, 206, 208, 210) vers une pluralité d'autres dispositifs de surveillance de pneu (10, 202, 204, 206, 208, 210), d'une entrée (226a-226f) afin de révéler l'engagement cryptographique (220a-220f) généré par le dispositif de surveillance de pneu (10, 202, 204, 206, 208, 210) respectif, et la vérification (312), au niveau de chaque dispositif de surveillance de pneu (10, 202, 204, 206, 208, 210), des engagements (220a-220f) reçus par le dispositif de surveillance de pneu (10, 202, 204, 206, 208, 210) respectif à l'aide des entrées respectives.

4. Procédé selon l'une quelconque des revendications précédentes, le procédé comprenant la diffusion (304), à partir de chaque dispositif de surveillance de pneu (10, 202, 204, 206, 208, 210) vers une pluralité d'autres dispositifs de surveillance de pneu (10, 202, 204, 206, 208, 210), d'une clé publique (212a-212f) générée par le dispositif de surveillance de pneu (10, 202, 204, 206, 208, 210) respectif, et la génération (306), au niveau de chaque dispositif de surveillance de pneu (10, 202, 204, 206, 208, 210), du paramètre cryptographique à l'aide des clés publiques (212a-212f) générées et reçues par le dispositif de surveillance de pneu (10, 202, 204, 206, 208, 210) respectif.

5. Procédé selon l'une quelconque des revendications précédentes, le procédé comprenant la génération, au niveau de chaque dispositif de surveillance de pneu (10, 202, 204, 206, 208, 210), d'un nombre aléatoire (216a-216f), et la génération (306) du paramètre cryptographique à l'aide du nombre aléatoire (216a-216f) généré par le dispositif de surveillance de pneu (10, 202, 204, 206, 208, 210) respectif.

6. Procédé selon l'une quelconque des revendications précédentes, le procédé comprenant la diffusion, à partir de chaque dispositif de surveillance de pneu (10, 202, 204, 206, 208, 210) vers une pluralité d'autres dispositifs de surveillance de pneu (10, 202, 204, 206, 208, 210), de données de configuration (20) de ce dispositif de surveillance de pneu (10, 202, 204, 206, 208, 210), et la génération du paramètre cryptographique comprenant l'utilisation des données de configuration (20).

7. Procédé (300) selon l'une quelconque des revendications précédentes, le procédé comprenant :
la génération (314), au niveau de chaque dispositif de surveillance de pneu (10, 202, 204, 206, 208, 210), d'une paire de clés partagées pour le dispositif de surveillance de pneu (10, 202, 204, 206, 208, 210) et chaque autre dispositif de surveillance de pneu (10, 202, 204, 206, 208, 210) ; chaque paire de clés partagées comprenant une première clé partagée (k) et une deuxième clé partagée (k') ;
la génération (316), au niveau de chaque dispositif de surveillance de pneu (10, 202, 204, 206, 208, 210), à l'aide d'une fonction basée sur les premières clés partagées respectives, d'une valeur à communiquer à chaque autre dispositif de surveillance de pneu (10, 202, 204, 206, 208, 210) ;
la transmission (318), à partir de chaque dispositif de surveillance de pneu (10, 202, 204, 206, 208, 210) à chaque autre dispositif de surveillance de pneu (10, 202, 204, 206, 208, 210), d'une valeur générée respective ;
la vérification (320), au niveau de chaque dispositif de surveillance de pneu (10, 202, 204, 206, 208, 210), de valeurs générées reçues ; et
lorsque les valeurs générées reçues sont correctement vérifiées, l'établissement (322) d'une communication sécurisée future entre des dispositifs de surveillance de pneu (10, 202, 204, 206, 208, 210) respectifs à l'aide des deuxièmes clés partagées respectives.

8. Procédé selon la revendication 7, dans lequel la génération (316) de la valeur à communiquer à chaque autre dispositif de surveillance de pneu (10, 202, 204, 206, 208, 210) à l'aide d'une fonction basée sur les premières clés partagées respectives comprend l'utilisation, comme entrées de la fonction, d'un quelconque ou de plusieurs des éléments suivants : un nombre aléatoire (216a-216f), une clé publique (212a-212f) générée par ce dispositif de surveillance de pneu (10, 202, 204, 206, 208, 210), et une clé publique (212a-212f) générée par l'autre dispositif de surveillance de pneu (10, 202, 204, 206, 208, 210) pour lequel la valeur est générée.

9. Procédé selon la revendication 7 ou la revendication 8, le procédé comprenant la génération, au niveau de chaque dispositif de surveillance de pneu (10, 202, 204, 206, 208, 210), d'une graine pour un générateur pseudo-aléatoire pour chaque autre dispositif de surveillance de pneu (10, 202, 204, 206, 208, 210), et la génération, au niveau de chaque dispositif de surveillance de pneu (10, 202, 204, 206, 208, 210), de la paire de clés partagées pour le dispositif de surveillance de pneu (10, 202, 204, 206, 208, 210) et chaque autre dispositif de surveillance de pneu (10, 202, 204, 206, 208, 210) à l'aide du générateur pseudo-aléatoire.

10. Procédé selon l'une quelconque des revendications précédentes, dans lequel la pluralité de dispositifs de surveillance de pneu (10, 202, 204, 206, 208, 210) comprend au moins trois dispositifs de surveillance de pneu.

11. Procédé selon l'une quelconque des revendications précédentes, le procédé comprenant la fourniture, au niveau de chaque dispositif de surveillance de pneu (10, 202, 204, 206, 208, 210), d'un signal (22) indiquant un état du dispositif de surveillance de pneu (10, 202, 204, 206, 208, 210) et la vérification, par un opérateur, que chaque signal (22) correspond à chaque autre signal (22).

12. Procédé selon la revendication 11, dans lequel le signal (22) indiquant un état du dispositif de surveillance de pneu (10, 202, 204, 206, 208, 210) comprend un signal (22) basé sur des données de configuration (20) du dispositif de surveillance de pneu (10, 202, 204, 206, 208, 210), des clés publiques (212a-212f) générées et reçues par le dispositif de surveillance de pneu (10, 202, 204, 206, 208, 210), et des nombres aléatoires (216a-216f) générés et reçus par le dispositif de surveillance de pneu (10, 202, 204, 206, 208, 210).

13. Procédé selon l'une quelconque des revendications précédentes, dans lequel la pluralité de dispositifs de surveillance de pneu (10, 202, 204, 206, 208, 210) comprend une pluralité de dispositifs de surveillance de pression de pneu (10, 202, 204, 206, 208, 210).

14. Dispositif de surveillance de pneu (10) comprenant un module de communication (16) destiné à communiquer avec une pluralité d'autres dispositifs de surveillance de pneu (202, 204, 206, 208, 210), et un processeur (12) configuré pour générer un paramètre cryptographique, le module de communication (16) étant configuré pour diffuser un message (218a) comprenant le paramètre cryptographique vers au moins deux de la pluralité d'autres dispositifs de surveillance de pneu (202, 204, 206, 208, 210) ; le paramètre cryptographique comprenant un engagement cryptographique (220a) généré par le dispositif de surveillance de pneu (10).

15. Dispositif de surveillance de pneu selon la revendication 14, dans lequel le module de communication (16) est configuré pour recevoir, via un message diffusé (218b-f), des paramètres cryptographiques générés par d'autres dispositifs (202, 204, 206, 208, 210) de la pluralité d'autres dispositifs de surveillance de pneu.

16. Système pour aéronef comprenant une pluralité de dispositifs de surveillance de pneu (10, 202, 204, 206, 208, 210) selon la revendication 14 ou la revendication 15.

17. Système pour aéronef comprenant une pluralité de dispositifs de surveillance de pneu (10, 202, 204, 206, 208, 210) configurée pour fonctionner selon le procédé de l'une quelconque des revendications 1 à 13.

18. Aéronef (100) comprenant le système pour aéronef selon la revendication 16 ou 17.
